# EUROPEAN PATENT APPLICATION

(11) **EP 3 662 740 A1**
(43) Date of publication of application: **10.06.2020**
(21) Application number: 19211176.3
(22) Date of filing: 25.11.2019
(51) Int. Cl.: A01D 87/12, A01F 29/00

(54) **DEVICE FOR PROCESSING ROUND BALES WRAPPED IN WRAPPING MATERIAL**

(30) Priority: 06.12.2018 NL 2022144
(71) Applicant: Triodor Arastirma Gelistirme Yazilim ve Bilisim Ticaret Limited Sirketi, 34852 Istanbul (TR)
(72) Inventor: ILKER, Mert, 3147 PB Maassluis (NL)
(74) Representative: Octrooibureau Van der Lely N.V.

(57) **Abstract**

The present invention relates to a device for processing round bales wrapped in wrapping material, said device comprising a frame (1) for receiving a bale (2) in a cutting position, a cutting element (3) moveably attached to the frame (1) for cutting through the wrapping material and at least a part of the bale (2) in an upward direction in said cutting position, and a stopper element (4) suitable to be put into contact with the upper side of the bale (2) so as to keep the bale (2) in its cutting position during cutting, wherein the stopper element (4) is constructed such that it is suitable for being moved relative to the frame (1) to engage the bale surface in the cutting position in at least three contact points (7), said three contact points (7) not lying on a straight line. In this way an improved device for processing round bales wrapped in wrapping material is provided.

The moveable stopper element (4) enables easy bale handling. Furthermore, this construction ensures a good contact with the surface of the bale (2) and thus guarantees that the bale (2) remains stable in its position during cutting. Even if the bale (2) is not properly cylindrical anymore (e.g. after a long time in stock), the at least three contact points (7) not lying on a straight line allow the stopper element (4) to adapt itself to the shape of the bale (2) and to apply pressure evenly from above during cutting.

## Description

The present invention relates to a device for processing round bales wrapped in wrapping material.

The term round bales in this text is used to refer to bales which have a substantially cylindrical shape, with two substantially circular end faces and one cylindrical body between the two end faces. In practice, round bales which have been kept in stock for a long time sometimes have deformed, so that they are not properly cylindrical anymore.

In order to preserve the crop material during storage of the bale, the bales may be wrapped in a plastic film, to keep the crop material clean and dry and to preserve the feed airtight. In order to use wrapped cylindrical bales for feeding purposes, the bales need to be processed, i.e. the netting or wires (if any) and/or the film needs to be cut and removed, the bales need to be cut at least once or even need to be shredded for the crop material to be made accessible to the animals. Possibly, the crop material also needs to be mixed with other feeds, such as potatoes, maize or feed concentrates, to prepare a feed ration for the animals.

Several processing (cutting and/or unwrapping) devices are known from the prior art, e.g. from WO 2015 / 091377 A1. The device described therein has a bar-shaped limiter element which is pivotable downwards to stabilize the bale on a frame in a cutting position. The limiter or stopper element does not functon properly at all times. For example, when the bale has been deformed, the stabilization is not satisfactory. There is a need for an improved device.

US 2013 / 0149082 discloses a bale cutting apparatus with a frame and an upwardly pivotable cutting means, a stop member being fixedly connected to the frame. This results in a major drawback: bales can not easily be handled, as the fixed stop member largely blocks the access to the device.

It is an object of the present invention to provide an improved device for processing round bales wrapped in wrapping material.

The invention achieves the object at least in part by means of a device according to claim 1, in particular a device for processing round bales wrapped in wrapping material, said device comprising a frame for receiving a bale in a cutting position, a cutting element moveably attached to the frame for cutting through the wrapping material and at least a part of the bale in an upward direction in said cutting position, and a stopper element suitable to be put into contact with the upper side of the bale so as to keep the bale in its cutting position during cutting, wherein the stopper element is constructed such that it is suitable for being moved relative to the frame to engage the bale surface in the cutting position in at least three contact points, said three contact points not lying on a straight line.

On the one hand, the moveable stopper element enables easy bale handling. On the other hand, this construction ensures a good contact with the surface of the bale and thus guarantees that the bale remains stable in its position during cutting. Even if the bale has been deformed an is not properly cylindrical anymore (e.g. after a long period of time in stock), the at least three contact points not lying on a straight line allow the stopper element to adapt itself to the shape of the bale and to apply pressure evenly from above during cutting.

Suitable and advantageous embodiments are described in the dependent claims, as well as in the description below.

Advantageously, the stopper element is constructed such that it is suitable for engaging the bale surface in the cutting position in four contact points, no subset of three contact points from said four contact points lying on a straight line. Such a construction ensures an even better contact with the bale surface and a better adaptation to the shape of the bale.

The device may advantageously be designed such that the stopper element is moveable relative to the frame between an active position engaging the bale surface and a rest position away from the bale. This enables easy handling.

In a further embodiment of the device, the stopper element is pivotable by means of a hydraulic cylinder. In this way, a straightforward and robust construction is realized.

In a still further embodiment, the stopper element comprises a moveable arm with a transverse bar rotatably connected thereto, said transverse bar extending substantially in parallel to the central axis of the bale, two contact bars being connected rotatably and substantially perpendicularly to said transverse bar. This is a simple, yet reliable construction.

Advantageously, the contact bars are bent such that each contact bar is suitable for engaging the bale surface in the cutting position in two contact points. In this way, a technically easy but efficient solution is provided, which prevents damage when the cutting element arrives at the top of the bale.

In a further embodiment, wrapping material removing means arranged to remove cut wrapping material from the bale are provided. This enhances the versatility of the device. When removing the net, wires and/or film it is important to make sure that these materials are completely separated from the crop material and that no parts remain in the crop material, as this could harm animals.

In a simple embodiment, the wrapping material removing means are provided at least partly on the stopper element. Thus, a compact and simple construction is realized.

In a preferred embodiment, the stopper element is provided with a sensor for measuring the force and/or the pressure exerted by the bale in its cutting position during cutting on the stopper element. This is useful, as the force or pressure is an indication of the (local) feed density and may be used to control the cutting action.

Advantageously, the sensor is provided in the hydraulic cylinder. This is a compact, yet robust construction.

In a further embodiment, the cutting element is a blade or a saw. Thus, a simple and efficient construction is provided.

Preferably, the cutting action of the cutting element is controlled with the aid of the sensor. This enables a better cutting action, well adapted to the local circumstances.

In a further embodiment, the sensor is used to determine the local density of the bale material. This is an easy and efficient way to determine this value, rendered possible by the proper stabilization of the bale.

In a highly advantageous embodiment, the cutting force of the cutting element is controlled in dependence on the measured local density of the bale material. In this way, a very precise control is enabled, which has proven to give an excellent cutting result.

The invention will now be further explained with reference to the following Figures.
Figure 1 shows an embodiment of a device according to the invention;
Figure 2 shows a stopper element of a device according to the invention.

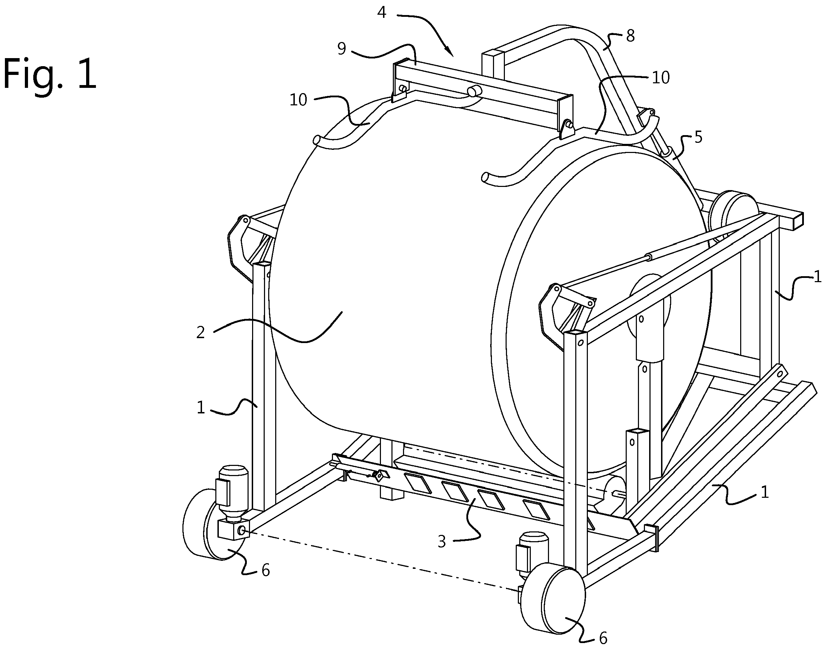

In Figure 1 an embodiment of a device for processing round bales wrapped in wrapping material according to the invention is shown. The device comprises a frame 1, formed as a bar structure, for receiving a round bale 2 in a cutting position.

The bale 2 has a substantially cylindrical shape, with two substantially circular end faces and one cylindrical body between the two end faces. In practice, round bales which have been kept in stock for a long time sometimes have been deformed, so that they are not properly cylindrical anymore. The bale 2 is wrapped in a plastic film, to keep the crop material clean and dry and to preserve the feed airtight during storage of the bale 2. In order to use a wrapped cylindrical bale 2 for feeding purposes, the bale 2 needs to be processed. Any netting or wires and/or the film needs to be cut and removed and the bale 2 needs to be cut at least once for the crop material to be made accessible to the animals. The crop material may also be mixed with other feeds, such as potatoes, maize or feed concentrates, to prepare a feed ration for the animals.

A cutting element 3 is moveably attached to the frame 1 for cutting through the wrapping material and at least a part of the bale 2 in an upward direction in the cutting position. The cutting element 3 can be pivoted upwards by means of a bar structure and an actuator (not shown), which are a part of the frame 1. It can cut the wrapping material at the bottom side of the bale 2 and then cut through the crop material inside the bale 2 up to a certain height, or even all the way up to the top of the bale 2. The cutting element 3 can be a blade or a saw.

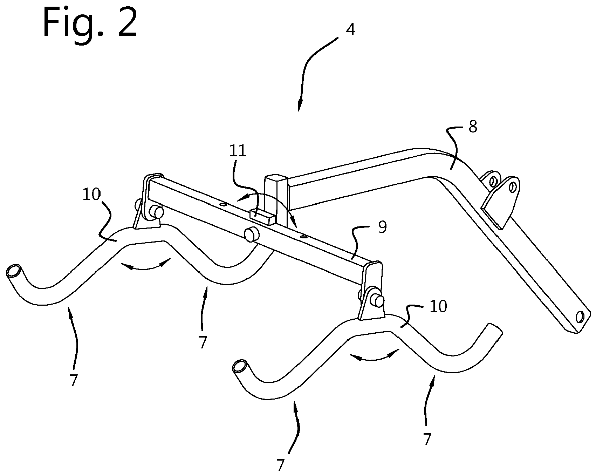

A stopper element 4 is provided, which is suitable to be put into contact with the upper side of the bale 2 so as to keep the bale 2 in its cutting position during cutting. The cutting element 3 tends to push the bale 2 in an upward direction, so that it is necessary to hold the bale 2 in its position. The stopper element 4 is constructed such that it is suitable for being moved relative to the frame 1 to engage the bale surface in the cutting position in at least three contact points, said three contact points not lying on a straight line. This will be elucidated below in more detail with reference to Figure 2. A (preferably hydraulic) cylinder 5 enables the stopper element 4 to be moved.

Front wheels 6 and one or more rear wheels (not shown) form an undercarriage, enabling the device to move or to be moved over the ground surface.

The moveable stopper element 4 enables easy bale handling, as it can be moved out of the way to improve the accessibility of the device. The bale 2 can thus be moved into the device and out of the device easily. Furthermore, the construction gives the stopper element 4 a good contact with the surface of the bale 2 and thus guarantees that the bale 2 remains stable in its position during cutting. Even if the bale 2 has been deformed an is not properly cylindrical anymore, e.g. after a long period of time in stock, the at least three contact points not lying on a straight line allow the stopper element 4 to adapt itself to the shape of the bale 2 and to apply pressure evenly from above during cutting.

In Figure 2 a stopper element of a device according to the invention is illustrated. In this embodiment, the stopper element 4 is constructed such that it is suitable for engaging the bale surface in the cutting position in four contact points 7, no subset of three contact points 7 from said four contact points 7 lying on a straight line. Such a construction ensures an even better contact with the bale surface and a better adaptation to the shape of the bale 2.

The device is designed such that the stopper element 4 is moveable relative to the frame 1 between an active position engaging the bale surface and a rest position away from the bale 2. This enables easy handling, as the stopper element 4 can be moved out of the way if needed to improve the accessibility of the device. To this end, the stopper element 4 is pivotable by means of a hydraulic cylinder 5 (see Figure 1).

The stopper element 4 comprises a moveable arm 8 with a transverse bar 9 rotatably connected thereto. The transverse bar 9 extends substantially in parallel to the central axis of the bale 2 and two contact bars 10 are connected rotatably and substantially perpendicularly to the transverse bar 9. This is a simple, yet reliable construction.

Advantageously, the contact bars 10 are bent such that each contact bar 10 is suitable for engaging the bale surface in the cutting position in two contact points 7. In this way, a technically easy but efficient solution is provided, which prevents damage when the cutting element 3 arrives at the top of the bale 2. The cutting element 3 will then extend into the space between the contact points 7 on each contact bar 10 without touching the latter.

In a further embodiment, which is not shown, wrapping material removing means arranged to remove cut wrapping material from the bale (which are known per se, in the form of hooks, clamps, grippers and the like) are provided on the device. This enhances the versatility of the device. When removing the net, wires and/or film it is important to make sure that these materials are completely separated from the crop material and that no parts remain in the crop material, as this could harm animals. The wrapping material removing means may be provided at least partly on the stopper element 4. Thus, a compact and simple construction is realized.

In a preferred embodiment, the stopper element 4 is provided with a sensor 11 for measuring the force and/or the pressure exerted by the bale 2 in its cutting position during cutting on the stopper element 4. This is very practical, as the force and/or pressure is an indication of the (local) feed density and may be used to control and improve the cutting action.

In the shown embodiment, the sensor 11 is positioned on the transverse bar 9. It may also be provided in the hydraulic cylinder 5, in order to have a compact, yet robust construction. The sensor 11 may be of the load cell type or the strain gauge type, for example.

According to the invention, the cutting action of the cutting element 3 is controlled with the aid of the sensor 11. This enables a very good cutting action, because it is always ideally adapted to the local circumstances. The sensor 11 is used to determine the local density of the bale material. This is an easy and efficient way to determine this value, rendered possible by the proper stabilization of the bale 2 with the aid of the stopper element 4. The cutting force of the cutting element 3 is then controlled in dependence on the measured local density of the bale material. If at a certain position the local density is high, the cutting force can be increased. This is done by means of a control unit (not shown), connected to the sensor 11 and to the frame 1, notably to the actuator for the cutting element 3.

The cutting force can thus be optimized. In this way, a very precise control is enabled, which has proven to give an excellent cutting result.

## Claims

1. Device for processing round bales wrapped in wrapping material, said device comprising a frame (1) for receiving a bale (2) in a cutting position, a cutting element (3) moveably attached to the frame (1) for cutting through the wrapping material and at least a part of the bale (2) in an upward direction in said cutting position, and a stopper element (4) suitable to be put into contact with the upper side of the bale (2) so as to keep the bale (2) in its cutting position during cutting, wherein the stopper element (4) is constructed such that it is suitable for being moved relative to the frame (1) to engage the bale surface in the cutting position in at least three contact points (7), said three contact points (7) not lying on a straight line.

2. Device according to claim 1, wherein the stopper element (4) is constructed such that it is suitable for engaging the bale surface in the cutting position in four contact points (7), no subset of three contact points (7) from said four contact points (7) lying on a straight line.

3. Device according to claim 1 or 2, wherein the stopper element (4) is moveable relative to the frame (1) between an active position engaging the bale surface and a rest position away from the bale (2).

4. Device according to claim 3, wherein the stopper element (4) is pivotable by means of a hydraulic cylinder (5).

5. Device according to any one of claims 1 - 4, wherein the stopper element (4) comprises a moveable arm (8) with a transverse bar (9) rotatably connected thereto, said transverse bar (9) extending substantially in parallel to the central axis of the bale (2), two contact bars (10) being connected rotatably and substantially perpendicularly to said transverse bar (9).

6. Device according to claim 5, wherein the contact bars (10) are bent such that each contact bar (10) is suitable for engaging the bale surface in the cutting position in two contact points (7).

7. Device according to any one of claims 1 - 6, wherein wrapping material removing means arranged to remove cut wrapping material from the bale (2) are provided.

8. Device according to claim 7, wherein the wrapping material removing means are provided at least partly on the stopper element (4).

9. Device according to any one of claims 1 - 8, wherein the stopper element (4) is provided with a sensor (11) for measuring the force and/or the pressure exerted by the bale (2) in its cutting position during cutting on the stopper element (4).

10. Device according to claim 9, as dependent on claim 4, wherein the sensor (11) is provided in the hydraulic cylinder (5).

11. Device according to any one of claims 1 - 10, wherein the cutting element (3) is a blade or a saw.

12. Device according to any one of claims 9 - 11, wherein the cutting action of the cutting element (3) is controlled with the aid of the sensor (11).

13. Device according to any one of claims 9 - 12, wherein the sensor (11) is used to determine the local density of the bale material.

14. Device according to claim 13, wherein the cutting force of the cutting element (3) is controlled in dependence on the measured local density of the bale material.
